# EUROPEAN PATENT APPLICATION

(11) **EP 1 120 365 A1**
(43) Date of publication of application: **01.08.2001**
(21) Application number: 01101849.6
(22) Date of filing: 26.01.2001
(51) Int. Cl.: B65G 17/06, B65G 21/22, B65G 17/30, B65G 17/48, B65G 19/18

(54) **Chain links with antifriction elements for conveyor belt with cross bars and side chains for medium-light material handling**

(30) Priority: 28.01.2000 IT PD000021
(71) Applicant: Graziani, Mario, 36060 Romano d'Ezzelino (VI) (IT)
(72) Inventor: Graziani, Mario, 36060 Romano d'Ezzelino (VI) (IT)
(74) Representative: Gustorf, Gerhard, Dipl.-Ing.

(57) **Abstract**

The invention is constituted by new sliding elements (1) with low friction coefficient, applied to the links of chains. These elements are provided with vertical walls (1.2) with holes (1.2) or slots for the insertion of the crossbars (3). These elements may have suitable configurations in order to guarantee smooth sliding either in curves and in overturned sections. These new elements (1) ensure improved sliding of the known types of chains, eliminate the need to use lubricants, reduce maintenance operations and improve the general efficiency of the chain.

## Description

The present invention concerns the sector of handling systems for the transport of lightweight objects along several processing stations; in particular, it concerns transport systems with conveyor belts, chain conveyors and similar equipment.

Various types of conveyor belts with chains are known, in which the crossbars are joined by known types of links, like for example the "regina", "genovese" or "ashwill" chains, or links with specific shapes, like for example those described in patent application n. PD 98 A 236 of 09.10.1998.

The links or modular units of the chain that drives the crossbars are made of metal and slide on metal guides along the entire course.

Even if the various surfaces are smooth, some friction is always produced and the continuous use results in the wear of said surfaces and in increased friction.

In order to reduce the friction produced by the conveyor belt when it slides, low-friction sliding elements are applied to the guides.

Even if the friction is reduced, the low-friction sliding elements wear out rather quickly due to the sliding of the metal elements.

Therefore, to reduce the wear and improve the sliding effect on the modular units and on the guides it is necessary to apply lubricants that may affect the hygienic conditions of the products to be handled. Furthermore, said guides and modular units need frequent cleaning and must be frequently replaced due to their wear.

The change and/or cleaning of the modular units and of the guides is extremely onerous as regards both costs and production efficiency, in fact the whole system must be at rest for the time required to carry out the change or cleaning operation.

In order to eliminate all the drawbacks mentioned above, an antifriction sliding element has been designed and implemented, which can be applied to the various chains of conveyor belts.

In practice, the links and/or modular units that connect and drive the crossbars are combined to antifriction sliding elements that cover the contact and sliding surfaces of the modular units themselves.

Said sliding elements of the modular units of the conveyor belt are made of a self-lubricating material with very low friction coefficient, like for example nylon and/or Teflon, polyethylene or other suitable materials.

The lower profile of said sliding element is in most cases flat or curve, in such a way as to provide firm support and guarantee the minimum friction during the sliding of the antifriction sliding element on the guides, and it may also be equipped with additional means for the connection of the sliding element to the links or modular units of the conveyor belt chain, and is also provided with holes or slots for the passage of the crossbars and the approach of the same to one another in curves.

In order to make the description clearer, some examples among many of the possible embodiments of the new sliding element, with reference to the enclosed drawings, are reported here below. These elements can be applied to any known kind of chain or to equivalent chains, provided that they are equipped with crossbars.

Figure 1 shows the element, in various equivalent configurations, provided with a lower and/or lateral sliding plane and with holes or slots for the passage of the crossbars.

Figure 2 shows various views of a "regina" chain, which in concept is similar to the chains used in bicycles, and in which it is possible to observe some sliding elements (1) that have been added.

In this example, each sliding element (1) comprises at least a horizontal plane part (1.1) with at least a vertical wall (1.2).

The horizontal plane part (1.1) is suitable for sliding on the guides of the conveyor belt and its dimensions and thickness are suitable for properly transmitting the weight of the conveyor belt and of the transported items to the guides and to the fixed structure of the conveyor belt.

The vertical wall (1.2) is orthogonal to the plane horizontal part (1.1), provided with some holes (1.21), in such a way as to secure the new sliding element (1) to the crossbars (3) of the conveyor belt. In particular, one of these holes (1.21) is rectangular or oval, so that it permits the approach of the crossbars (3) to one another in curves.

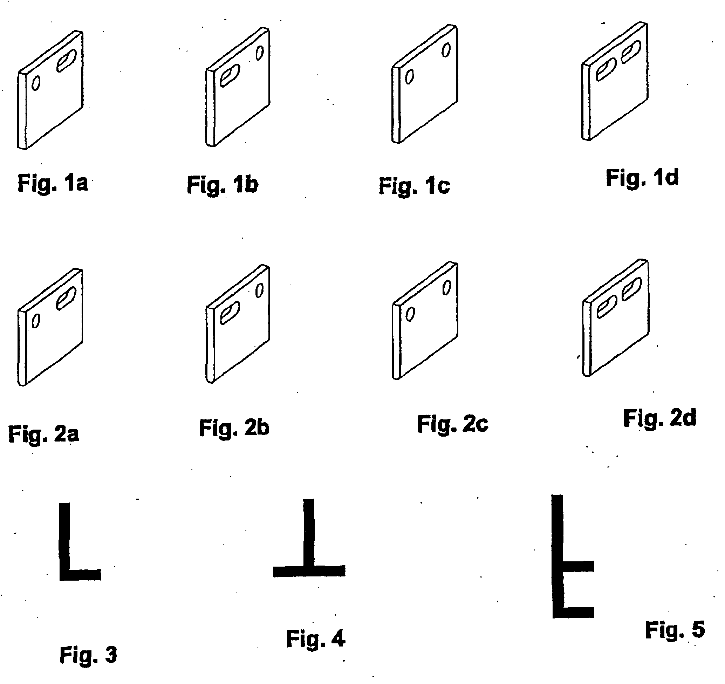

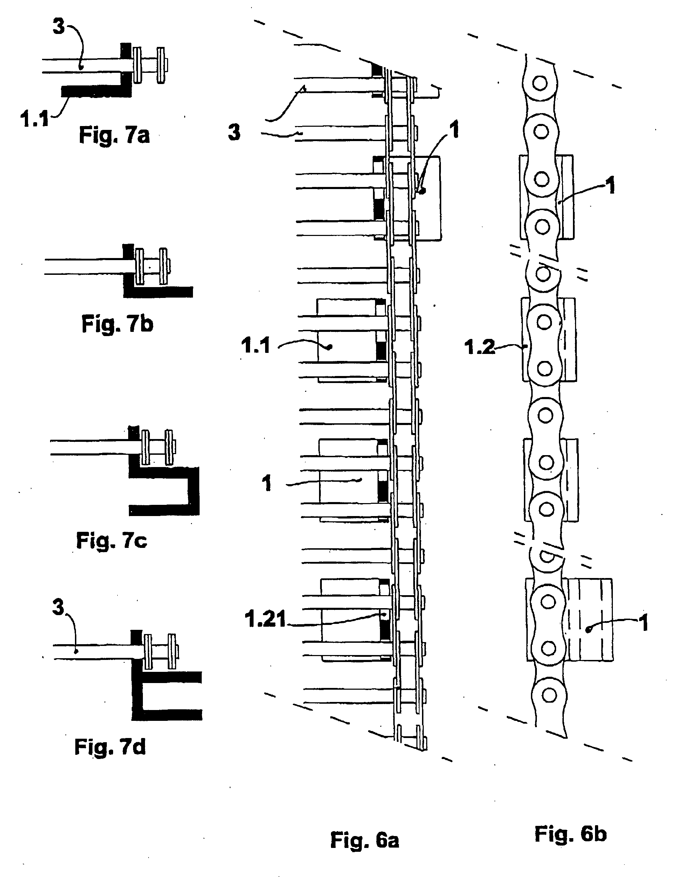

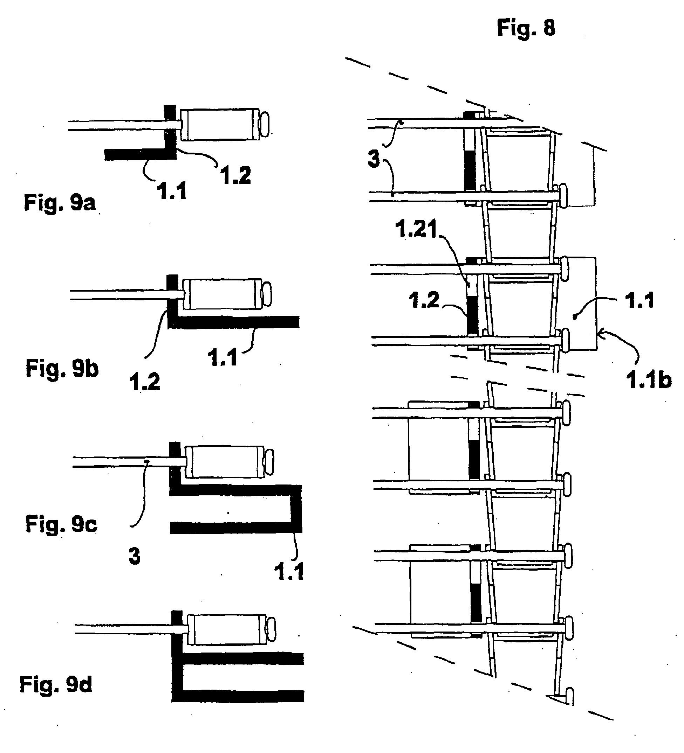

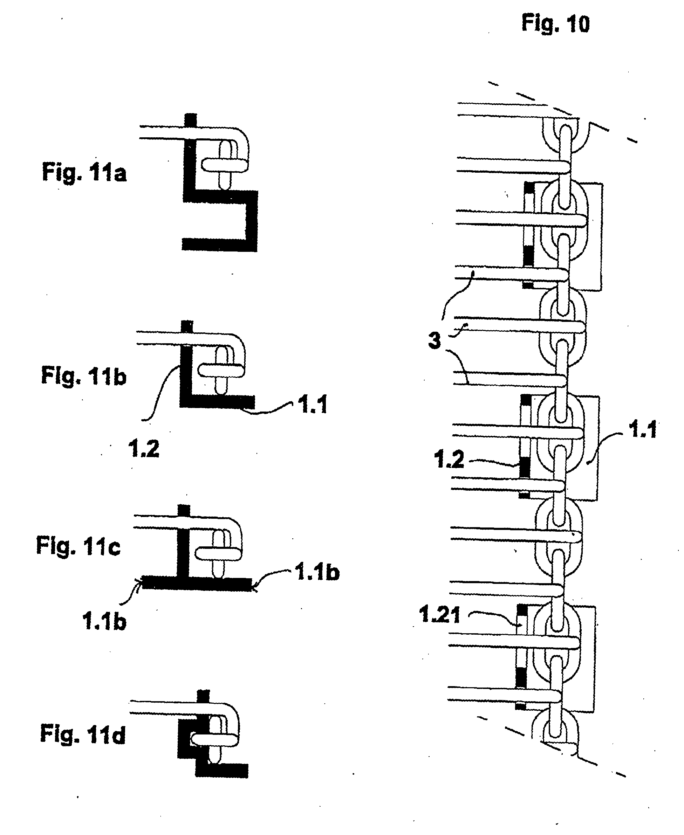

Figure 3 shows various views of an "ashwill" chain, in which it is possible to observe some sliding elements (1) that have been added.

In this example each sliding element (1) comprises at least a plane horizontal part (1.1) with a vertical wall (1.2).

The plane horizontal part (1.1) is suitable for sliding on the guides (2) of the conveyor belt and its dimensions and thickness are suitable for properly transmitting the weight of the conveyor belt and of the transported items to the guides (2) and to the fixed structure of the conveyor belt.

The vertical wall (1.2) is orthogonal to the plane horizontal part (1.1), provided with some holes (1.21), in such a way as to secure the new sliding element (1) to the crossbars (3) of the conveyor belt. In particular, one of these holes (1.21) is rectangular or oval, so that it permits the approach of the crossbars (3) to one another in curves. In turn, the lateral edge (1.1b) of the horizontal element (1.1) may also serve as lateral support.

Figure 4 shows various views of a "genovese" chain, in which it is possible to observe some sliding elements (1) that have been added.

In this example each sliding element (1) comprises at least a plane horizontal part (1.1) with a vertical wall (1.2).

The plane horizontal part (1.1) is suitable for sliding on the guides of the conveyor belt and its dimensions and thickness are suitable for properly transmitting the weight of the conveyor belt and of the transported items to the guides and to the fixed structure of the conveyor belt.

The vertical wall (1.2) is orthogonal to the plane horizontal part (1.1), provided with some holes (1.21), in such a way as to secure the new sliding element (1) to the crossbars (3) of the conveyor belt. In particular, one of these holes (1.21) is rectangular or oval, so that it permits the approach of the crossbars (3) to one another in curves.

The new sliding elements or planes constituted as described above make it possible to eliminate the friction due to the sliding of the conveyor belt chains almost completely and at the same time considerably reduce the wear of the antifriction elements positioned on the sliding guides of the conveyor belt, while completely eliminating the use of lubricants.

Each single antifriction element, which can also be used as internal and/or external support for the chain itself, is firmly applied to the links or modular units of the conveyor belt and does not represent a hindrance for the normal sliding of the conveyor belt itself.

## Claims

1. Links or modular units for conveyor belts with crossbars and side chains for the transport of medium or lightweight items, characterized in that they are provided with antifriction sliding elements applied to their lower and/or lateral part, comprising a plane horizontal and/or lateral support part (for the link or modular unit) sliding on the guides of the conveyor belt and provided with one or more holes and/or slots for the insertion and sliding and/or approach of the crossbars to one another.

2. Links or modular units for conveyor belts with crossbars and side chains for the transport of medium or lightweight items according to claim 1, characterized in that they are provided with additional connection elements constituted by a vertical wall provided with one or more holes and/or slots housing the parts of the conveyor belt crossbars that are near the links.

3. Links or modular units for conveyor belts with crossbars and side chains for the transport of medium or lightweight items according to claim 1, 2, characterized in that said additional connection elements are provided with said vertical wall/walls with one or more holes and/or slots housing the crossbar parts and also with a lower enlarged plane protruding from one or both sides.

4. Links or modular units for conveyor belts with crossbars and side chains for the transport of medium or lightweight items according to claim 1, 2, 3, characterized in that said additional connection elements are provided with said vertical wall/walls with one or more holes housing the crossbar parts and also with one or more enlarged planes protruding from one or both sides.

5. Antifriction sliding elements, characterized in that they comprise a plane horizontal and/or lateral support part sliding on the guides of the conveyor belt and provided with one or more holes and/or slots for the insertion and sliding of the crossbars and applied to the lower and/or lateral part of links or modular units of conveyor belts with crossbars or sidechains for the transport of medium or lightweight items.

6. Conveyor belt, characterized in that it is provided with modular units according to claims 1, 2, 3, 4, 5.

7. Conveyor belt according to claim 5, characterized in that said modular units according to claims 1, 2, 3, 4 have the shape of an overturned "T", or of an"F" or "L", in such a way as to cover the sides of the modular units in contact with the guides, and wherein the horizontal section of the "T" faces towards the guides, so that it supports the conveyor belt even during the return movement in overturned position.
